# EUROPEAN PATENT SPECIFICATION

(11) **EP 1 374 533 B1**
(45) Date of publication and mention of the grant of the patent: **06.10.2004**
(21) Application number: 02735203.8
(22) Date of filing: 28.03.2002
(51) Int. Cl.: H04L 29/06, H04L 12/22, H04L 9/32

(54) **FACILITATING LEGAL INTERCEPTION OF IP CONNECTIONS**
ERMÖGLICHEN LEGALES ABFANGEN VON IP-VERBINDUNGEN
PROCEDE PERMETTANT DE FACILITER L'INTERCEPTION LEGALE DE CONNEXIONS IP

(30) Priority: 03.04.2001 GB 0108267
(43) Date of publication of application: 02.01.2004
(73) Proprietor: Telefonaktiebolaget LM Ericsson (publ), 164 83 Stockholm (SE)
(72) Inventor: AHONEN, Pasi, FIN-90630 Oulu (FI); TOIVANEN, Harri, 002230 Espoo (FI)
(74) Representative: Tonscheidt, Andreas
(86) International application number: PCT/EP2002/003589
(87) International publication number: WO 2002/082769

(56) References cited:
- WO-A-00/56029
- US-A- 5 850 451
- BALENSON^1 D ET AL: "ISAKMP Key Recovery Extensions" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, vol. 19, no. 3, January 2000 (2000-01), pages 91-99, XP004200660 ISSN: 0167-4048

## Description

### Field of the Invention

The present invention relates to a method and apparatus for facilitating legal interception of IP connections.

### Background to the Invention

It is now possible to establish various forms of connection over the internet including data connections as well as voice and video telephony connections. As the speed and extent of the Internet increase, the use of voice and video telephony can be expected to grow. Whilst current technology tends to restrict IP telephony to communications between computer terminals coupled to the Internet, tomorrow's technology will provide for IP telephony between small dedicated telephony terminals, and other mobile devices such as PDAs, palmtop computers etc.

In order to allow such devices to gain widespread acceptance, a key issue which must be addressed is that of security. The two main security concerns are the avoidance of unauthorised eavesdropping, and the need to authenticate terminals involved in a communication (i.e. to ensure that the terminal which a "subscriber" connects to is the terminal which the subscriber intends to connect to and *vice versa*). However, these concerns are not unique to IP telephony, and are common to many different forms of IP communication.

An Internet Engineering Task Force (IETF) standard known as IPsec (RFC2401) has been defined and provides for the creation of a secure connection between parties using IPv4 and IPv6. In the IPsec model the end points of the secure connection are identified by their IP addresses. In order to allow IPSec packets to be properly encapsulated and decapsulated it is necessary to associate security services and a key between the traffic being transmitted and the remote node which is the intended recipient of the traffic. The construct used for this purpose is a "Security Association" (SA). SAs are negotiated between peer nodes using a mechanism known as "Internet Key Exchange" (IKE), and are allocated an identification known as a "Security Parameter Index" (SPI). The appropriate SA is identified to the receiving node by including the corresponding SPI in the headers of the transmitted data packets. Details of the existing SAs and the respective SPIs are maintained in a Security Association Database (SAD) which is associated with each IPSec node.

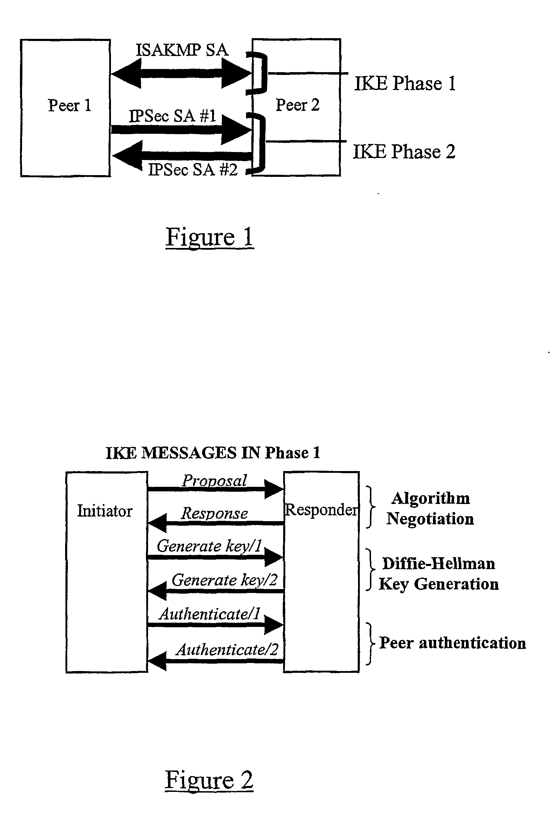

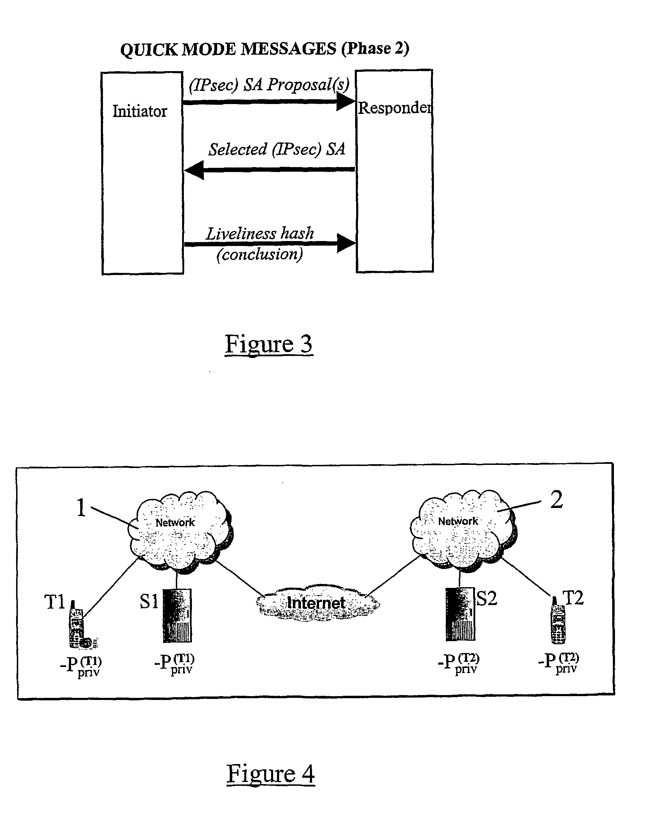

As already noted, IPSec SAs are negotiated using the IKE mechanism. More particularly, IPSec SAs make use of IKE phase 2. IKE phase 1 involves the negotiation of an IKE SA. Figure 1 illustrates in general terms the two phases of IKE. When IKE phase 1 is initiated between two nodes, communications are carried out in the open. The mechanisms used must therefore be extremely secure and inevitably computationally intensive. At the end of phase 1 both nodes are authenticated to each other, and a shared secret is established between them. IKE phase 2 makes use of the IKE SA to negotiate one or more IPSec SAs. As the phase 2 negotiations are carried out within a secure "shell", they can be much less computationally intensive than the phase 1 negotiation. Whilst a new IKE SA may be negotiated only infrequently (e.g. one a day or once a week), IPSec SAs may be negotiated every few minutes. IKE phases 1 and 2 are illustrated in more detail in Figures 2 and 3.

IPSec makes use of one or both of the Authentication Header (AH) and Encapsulation Security Payload (ESP) protocols which in turn make use of the corresponding established IPSec SA. Both of these protocols provide for the authentication of sent data packets whilst ESP provides in addition for the encryption of user data. The use of AH and/or ESP is agreed upon by the communicating nodes during the IKE negotiations. It is expected ESP will be preferred for VoIP due to its use of encryption.

The precise way in which IPSec is implemented in a system depends to a large extent upon the security policy of the organisation wishing to employ IPSec. For example, the organisation may specify end-points (e.g. user terminals) to which IP packets may be sent, or from which they may be received, the particular security levels to be used for encrypting packets, etc. Policy is stored in a Security Policy Database (SPD) which is also associated with each IPSec node. Typically, the SPD is distributed amongst a plurality of entities of the IPSec node.

Patent document US-A-5 850 451 (15-Dec-1998) teaches a method and a system for legal interception of data communications, by storing an allocated key-pair both at the terminals and some interception authority.

### Summary of the Invention

Traditional circuit switched telephone networks make provision for the legal interception of telephone calls. Such interception must be instigated by the appropriate authorities and is an important weapon against crime. Understandably, it is desirable to make provision for the legal interception of IP connections (whether data, VoIP, video, etc). However, this presents a problem as the IP security protocol which will become the *de facto* standard is IPSec, and IPSec has been designed to provide terminal-to-terminal security involving strong encryption.

It is an object of the present invention to overcome the problems inherent to IPSec, and in particular to facilitate the legal interception of IP connections.

According to a first aspect of the present invention there is provided a method of facilitating the legal interception of IP connections, where two or more terminals can communicate with each other over the Internet using IPSec to provide security, the method comprising:
allocating to each terminal a public/private key pair for use in negotiating IKE and IPSec Security Associations (SAs) with other terminals;
where a terminal is coupled to the Internet via an access network, storing the private key of that terminal within the access network; and
when an IP connection is initiated to or from a terminal on which a legal interception order has been placed, using the private key stored for that terminal within the access network to intercept the connection.

The present invention is applicable in particular to facilitating the interception of IP connections made to or from terminals coupled to telecommunication networks, e.g. wireless telecommunication networks, fixed line telephone networks, and cable networks. Such networks present the authorities with confidential access points to the connections to be intercepted. Where the access network is a wireless telecommunication networks, the private keys for subscribers may be stored at an MSC (GSM network) or at an RNC (UMTS/3GPP network) or their equivalents, or at a server coupled to the MSC/RNC. Where the access network is a fixed line telephone network, the private keys may be stored at the local exchanges of subscribers, or at servers coupled to the local exchanges.

The invention is applicable to IP connections between two or more terminals each of which is coupled to the Internet via an access network holding the necessary private keys. The invention is also applicable to IP connections extending between one of these such terminals and another terminal which handles ISAKMP negotiations itself, without the aid of an access network holding the private key of the terminal.

In certain embodiments of the invention, following the receipt of a request for an IKE phase 1 SA at the access network of a terminal initiating an IP connection, the access network negotiates an ISAKMP SA with a remote node on behalf of the initiating terminal, and passes the SA parameters (including the established shared key) to the initiating terminal over a secure connection. The remote node may be the terminal with which the initiating terminal wishes to establish a connection, or may be a node to which that terminal is coupled.

Once the ISAKMP SA has been established, if the initiating terminal sends a request for the establishment of an IKE phase 2 SA intended for the destination terminal, the access network determines whether or not a legal interception order has been placed on that terminal or on the terminal to which the initiating terminal wishes to connect. If such an order has been placed, the access network interposes itself between the initiating terminal and the remote node during the negotiation of a pair of IKE phase 2 SAs. An important consideration is that neither the initiating terminal, nor the terminal to which the initiating terminal connects, must know that an interception is being made.

In other embodiments of the invention, and in which both of the terminals between which it is desired to establish a connection are coupled to the Internet via the same or different access networks, receipt at an access network (the "first" network) of a request for establishment of an IKE phase 1 from an initiating terminal causes that first network to forward the request to the access network (the "second" network) of the other terminal. The second network then makes a decision on legal interception. If legal interception is required, the second network negotiates an ISAKMP SA directly with the initiating terminal. The first network negotiates a second ISAKMP SA directly with the destination terminal.

When the first access network receives from the initiating terminal a request for the establishment of IPSec SAs, the second access network negotiates a pair of SAs directly with the initiating terminal whilst the first access node negotiates a second pair of SAs directly with the destination terminal. In this way, each of access networks has access to one of the two communication channels. One of the access networks may relay the channel which it is monitoring to the other access network (or to some other node).

In still other embodiments of the present invention, a private key of a terminal to be monitored may be passed from one access network to another so that one access network is in possession of the private keys of both (or all) parties involved in an IP connection. This may be achieved in such a way that the private key is not explicitly disclosed to the receiving access network (e.g. by embedding the key in executable code).

Preferably, IKE Phase 1 (and Phase 2 if appropriate) negotiations handled by an access network are handled by a server. This server may be coupled to or incorporated into a switch of the access network.

Preferably, the public/private key pair allocated to a terminal is stored in a memory of or coupled to the terminal in such a way that the user of the terminal cannot alter the private key without the consent of the operator of the relevant access network.

The invention is applicable in particular to facilitating the interception of data calls although it is also applicable to VoIP calls and other forms of IP telephony including videoconferencing.

According to a second aspect of the present invention there is provided a server for use in intercepting IP connections between two or more terminals, the server comprising a memory for storing the private keys of public/private key pairs of respective terminals, and processing means for identifying when legal interception is to be carried out on a connection to or from a terminal, and for intercepting that connection using the private key of the terminal.

### Brief Description of the Drawings

Figure 1 illustrates at a general level the signalling between two nodes during a secure data connection establishment process;
Figure 2 illustrates at a more detailed level the signalling involved in an IKE phase 1 of the process of Figure 1;
Figure 3 illustrates a Quick Mode message exchange of an IKE phase 2 of the process of Figure 1;
Figure 4 illustrates schematically a system for providing IP telephony between user terminals;
Figure 5 is a signalling diagram illustrating a first method of facilitating legal interception of an IP connection between two of the terminals in Figure 4; and
Figure 6 is a signalling diagram illustrating a second method of facilitating legal interception of an IP connection between two of the terminals in Figure 4.

### Detailed Description of a Preferred Embodiment

The method which will now be described makes use of features described in the following documents: [IPsec] RFC 2401, Security Architecture for the Internet Protocol, November 1998; [IKE] RFC 2409, The Internet Key Exchange (IKE), November 1998; [ISAKMP] RFC 2408, Internet Security Association and Key Management Protocol, November 1998; IETF Draft ''Running IKE Phase 2 over Artificial Kerberos IKE SA", draft-ietf-kink-ike-over-kkmp-00.txt; RFC 2459, Internet X.509 Public Key Infrastructure Certificate and CRL Profile. Reference should be made to these documents for a fuller understanding of the method.

Figure 4 illustrates a scenario in which a pair of mobile wireless terminals T1,T2 are coupled to the Internet via respective access networks 1,2. For the purpose of this example, the access networks 1,2 are considered to be mobile telecommunication networks, with the wireless terminals T1,T2 being mobile telephones (or other mobile wireless terminals having mobile telephone functionality). It is noted that whilst current digital networks (such as GSM, PDS, and digital AMP networks) allow user terminals to access the Internet, Internet access will be greatly enhanced by the introduction of data services (such as GPRS) and as third future generation mobile networks (such a UMTS) are introduced. The terminals T1,T2 are assumed to be specifically designed to facilitate IP data calls (and possibly IP telephony applications including VoIP and video telephony).

Illustrated in Figure 4 are a pair of interception servers S1,S2 associated with respective access networks 1,2. Each server S1,S2 is coupled to that "switch" (e.g. MSC or RNC - not shown in Figure 4) of the associated access network 1,2 which handles IP calls made to or from terminals connected to the network. As explained above, in order to make use of IPSec to secure IP connections, a terminal should be in possession of a public/private key pair (Pₚᵣᵢᵥ/P_{publ}). This key pair may be stored in a fixed memory of the terminal or may be stored in the terminal's SIM card. It is assumed to have been stored there by the operator of the access network to which the terminal's owner subscribes, prior to the terminal being presented to the owner. Once stored in the terminal (or SIM card) it is not possible for the owner to change the key pair without the consent of the network operator. The operator retains a copy of the subscriber's public/private key pair and stores this in a look-up table of the interception server S1,S2. The server also has a knowledge of the terminal's capabilities including the available cryptographic algorithms and the default security policy. The server maintains a record of those subscribers on whom legal interception orders have been placed by the authorities.

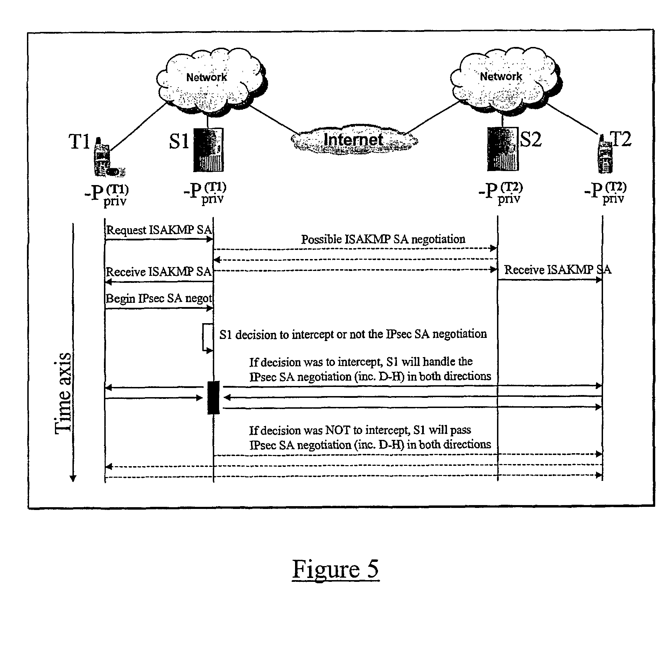

When a terminal (say T1 in Figure 4) wishes to establish an IP connection to another terminal it must first obtain the IP address of the other terminal T2. If the initiating terminal T1 does not know this IP address from the outset, it must obtain it, e.g. by sending a user entered URL to a Domain Name Server (DNS) which can resolve the address and return it to the initiating terminal. As already outlined above, in order to secure the connection, the initiating terminal T1 must then negotiate a pair of IPSec SAs with the other (or "destination") terminal T2. Figure 5 illustrates the exchange of signalling messages required to establish a pair of SAs.

Firstly, the initiating terminal T1 sends a Request ISAKMP SA message to its access network 1. This message contains the identity of the initiating and destination terminals (which may be the terminals' IMSI codes or telephone numbers). The request is handled by the access network's interception server S1. The server checks whether or not it holds the private key for initiating terminal T1. If not, the call connection attempt is rejected. If the server does hold the appropriate private key, the server S1 handles the negotiation of the ISAKMP SA (IKE phase 1) on behalf of the terminal T1 (the terminal T1 does not require IKE Phase 1 capabilities). In the same way, the interception server S2 in the access network 2 of the "destination" terminal T2 handles the ISAKMP SA negotiation on behalf of that terminal T2. This is possible because the interception servers S1,S2 know the private keys of the respective terminals T1,T2. Upon completion of the negotiation, the relevant ISAKMP SA parameters are returned by the interception servers to their respective terminals. As the access networks are private networks, typically using security protocols to secure transmission over the radio interface, there is no danger of the returned parameters falling into the wrong hands. (As an alternative to IKE Phase 1, Kerberos authentication may be used.)

At this stage, the interception servers S1,S2 know the parameters which will be used to secure the subsequent negotiation of IPSec SAs between the terminals (i.e. IKE Phase 2). When terminal T1 wishes to begin a secure communication with terminal T2, it sends a Begin IPSec SA negotiation request to terminal T2. This message is intercepted by the access network 1 and the interception server S1 is notified. The request includes in its header portion the relevant ISAKMP SA data. The server S1 then checks its records to see if either the initiating or destination terminals have legal interception orders placed on them. If they do not, the IPSec SA negotiation continues without the involvement of interception server S1. It is noted that once the IPSec SAs have been negotiated in this way, it is not possible for the access network to intercept (and decrypt) traffic carried using the IPSec SAs. If on the other hand the interception server S1 determines that a legal interception order has been placed on one of the terminals T1 or T2, the server S1 interposes itself between terminals T1 and T2 during the negotiation of the pair of IPSec SAs (similarly server S2 may interpose itself in the IPSec SA negotiation if that server decides that it too must intercept the connection). As far as terminals T1 and T2 are concerned, they are negotiating the IPSec SAs with each other and are not aware of the role of the server(s) in the process. Subsequently, encrypted traffic may be intercepted at the server S1, decrypted using the negotiated IPSec SA parameters known to server S1, and routed to an appropriate monitoring point. An important feature is that neither of the terminals is allowed to run the full ISAKMP negotiation.

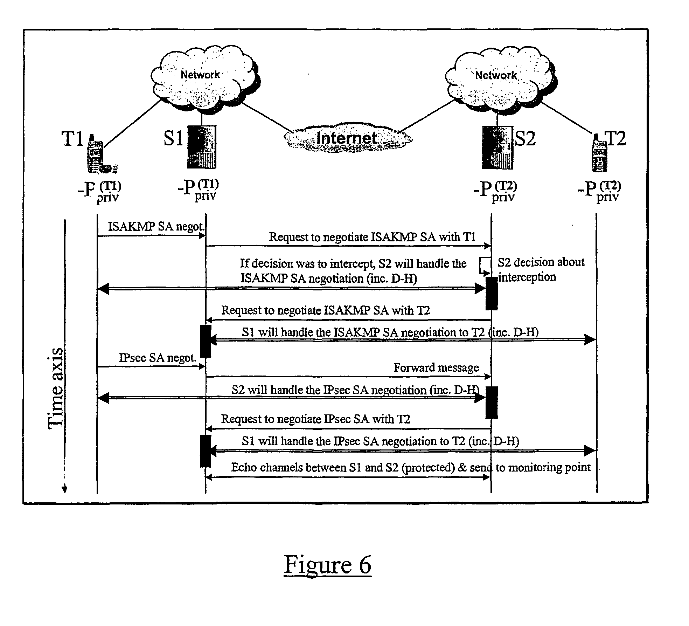

There is illustrated in Figure 6 signalling associated with an alternative interception scheme. In this scheme, successful legal interception requires the active participation of both interception servers S1,S2 which again hold the private keys of their respective subscribers, and also assumes that the terminals involved in the connection are capable of handling the IKE phase 1 negotiations (nb. this latter requirement does not exist for the embodiment of Figure 5). When an interception server (S1 in Figure 6) receives a request for an ISAKMP SA negotiation from an originating terminal T1, that interception server S1 forwards the request to the destination side interception server S2. If the initiating side interception server S1 determines that legal interception is required, a flag is set in the sent request.

When the destination side interception server S2 receives the request it checks the status of the interception flag. If that flag is set, or if the receiving interception server S2 determines from its own records that legal interception is required, the server S2 performs the first ISAKMP SA negotiation (including the Diffie-Hellman exchange) directly with the initiating terminal T1 on behalf of the destination terminal T2. The destination side interception server S2 also notifies the originating side server S1 that it should negotiate a second ISAKMP SA directly with the destination terminal T2.

When the initiating side access network 1 subsequently intercepts an IPSec SA negotiation request sent from the initiating terminal T1 (and intended for the destination terminal T2), the request is forwarded to the destination side interception server S2. The destination side interception server S2 represents itself to terminal T1 as if it were the destination terminal T2 for the purpose of the IPSec phase 2 negotiation. A pair of IPSec SAs are established between terminal T1 and the interception server S2. At the same time, the destination side interception server S2 instructs the initiating side interception server S1 to negotiate a second pair of IPSec SA with the destination terminal T2. Server S1 therefore represents itself to the destination terminal T2 as if it were terminal T1 during the IPSec phase 2 negotiation. A second pair of IPSec SAs are established between server S1 and terminal T2.

It is necessary to echo data between the servers S1 and S2 in order to give the servers access to both channels. Thus, data originating from terminal T1 is reflected by server S2 to server S1. Server S1 then encrypts the data using the appropriate IPSec SA and sends it to terminal T2. Similarly, data originating from terminal T2 is reflected by server S1 to server S2, with server S2 encrypting the data using the appropriate IPSec SA and sending it to terminal T1.

It is noted that with the embodiment of Figure 6 there is no need for "artificial" ISAKMP SA transfers (between servers and terminals). Rather, the initiating terminals IKE signalling will be processed by the destination side interception server and *vice versa.*

It will be appreciated by the person of skill in the art that various modifications may be made to the above described embodiments without departing from the scope of the present invention. For example, in the embodiment described with reference to Figure 6, the additional delay which results from echoing one monitored channel back from one interception server to the other may be avoided by executing a secure IKE proxy server at the interception server which is monitoring the connection. This proxy server is sent from the other interception server and contains the private key of the terminal for which it is responsible. The private key is incorporated into the proxy server in such a way that it is not disclosed to the receiving interception server. However, when the proxy server is executed, it allows the interception server to conduct the IKE phase 1 and 2 negotiations directly with the initiating and destination terminals. Thus, the interception server will have access to both traffic channels.

## Claims

1. A method of facilitating the legal interception of network connections, where two or more terminals can communicate with each other over insecure networks using a standard security protocol to provide a secure session, the method comprising:
allocating to each terminal at least one public/private key pair for use in negotiating session encryption keys with other terminals;
where a terminal is coupled to an interconnecting network via an access network, storing the private key of that terminal within the access network; and
when a connection is initiated to or from a terminal on which a legal interception order has been placed, using the private key stored for that terminal within the access network to intercept the communication,
**characterised in that**
the access network for a terminal interposes itself between that terminal and a remote node during the negotiation of session encryption keys between the terminal and the remote node, such that the access network has a knowledge of negotiated session encryption keys.

2. A method according to claim 1, wherein said access network is one of a wireless telecommunication network, a fixed line telephone network, and a cable network.

3. A method according to claim 2, where the access network is a wireless telecommunication networks, and the private keys for subscribers are stored at a network switch or at a server coupled to a switch.

4. A method according to any one of the preceding claims, wherein said insecure network is the Internet.

5. A method according to claim 4, wherein said secure session is established using IPSec.

6. A method according to claim 5, wherein said public/private key pair is used to negotiate IKE and IPSec Security Associations hereinafter referred to as SA, comprising said session encryption keys.

7. A method according to claim 6, wherein, following the receipt of a request for an ISAKMP SA at the access network of a terminal initiating an IP connection, the access network negotiates an ISAKMP SA with a remote node on behalf of the initiating terminal, and passes the SA parameters to the initiating terminal over a secure connection.

8. A method according to claim 7, wherein, once the ISAKMP SA has been established, if the initiating terminal sends a request for the establishment of IPSec SAs towards a destination terminal, the access network determines whether or not a legal interception order has been placed on that terminal or on the terminal to which the initiating terminal wishes to connect and, if such an order has been placed, the access network interposes itself between the terminal and the remote node during the negotiation of a pair of IPSec SAs.

9. A method according to claim 6 and comprising:
receiving at an access network, the "first" network, a request for establishment of an ISAKMP SA from an initiating terminal;
forwarding the request to the access network, the "second" network, of the other terminal;
making a decision at the second network on legal interception; and
if legal interception is required, negotiating an ISAKMP SA directly between the second network and the initiating terminal and negotiating a second ISAKMP SA directly between the first access network and the destination terminal.

10. A method according to claim 9, wherein when the fist access network receives from the initiating terminal a request for the establishment of IPSec SAs, the second access network negotiates a pair of IPSec SAs directly with the initiating terminal whilst the first access node negotiates a second pair of FPSec SAs directly with the destination terminal.

11. A method according to any one of claims 1 to 6 and comprising passing a private key of a terminal to be monitored from one access network to another so that one access network is in possession of the private keys of both or all parties involved in an IP connection.

12. A method according to claim 11, wherein said private key is passed from one access network to another without explicitly disclosing the private key to the receiving access network.

13. A method according to claim 12, wherein said private key is passed from one access network to another as part of an executable code which can be executed by the receiving network to facilitate negotiation of session encryption keys with a terminal using the receiving network as access network.

14. A method according to any one of the preceding claims and comprising storing the public/private key pair allocated to a terminal in a memory of or coupled to the terminal in such a way that the user of the terminal cannot alter the private key without the consent of the operator of the relevant access network.

15. A method according to any one of claims 1 to 6, wherein a node within the access network for a terminal negotiates session encryption keys for both commununication directions, on behalf of that terminal, with a remote terminal or a node within the access network for that remote terminal.

16. A method according to any one of claims 1 to 6, wherein nodes within the access networks of a pair of terminals negotiate session encryption keys with the respective remote terminals, and during interception of a connection each node intercepts communications in one direction, with at least one of the nodes echoing intercepted communications to the other of the nodes.

17. A method according to any one of the preceding claims and comprising storing in the access network terminal security capabilities.

18. A server for use in intercepting IP connections between two or more terminals, the server comprising a memory for storing the private keys of public/private key pairs of respective terminals, first processing means for identifying when legal interception is to be carried out on a connection to or from a terminal, **characterised in that** it comprises second processing means for interposing the server between that terminal and a remote node during the negotiation of session encryption keys between the terminal and the remote node, such that the access network has a knowledge of negotiated session encryption keys, and third processing means for intercepting the connection using the private key of the terminal.

## Patentansprüche

1. Verfahren zur Vereinfachung der rechtmäßigen Überwachung von Netzverbindungen, bei dem zwei oder mehr Endgeräte miteinander über unsichere Netze kommunizieren können, indem ein Standardsicherheitsprotokoll zum Bereitstellen einer sicheren Sitzung verwendet wird, wobei das Verfahren folgendes umfaßt:
- Zuordnen wenigstens eines öffentlichen/privaten Schlüsselpaares an jedes Endgerät zur Verwendung in der Verhandlung von Sitzungsverschlüsselungsschlüsseln mit anderen Endgeräten;
- wenn ein Endgerät über ein Zugangsnetz mit einem Verbindungsnetz verknüpft ist, Speichern des privaten Schlüssels dieses Endgerätes im Zugangsnetz; und
- wenn eine Verbindung zu oder von einem Endgerät initiiert wird, für das ein rechtmäßiger Überwachungsauftrag besteht, Verwenden des privaten Schlüssels, der für dieses Endgerät im Zugangsnetz gespeichert ist, um die Kommunikation zu überwachen,
**dadurch gekennzeichnet, daß**
sich das Zugangsnetz für das Endgerät zwischen diesem Endgerät und einem Fernknoten während der Verhandlung von Sitzungsverschlüsselungsschlüsseln zwischen dem Endgerät und dem Fernknoten derart zwischenschaltet, daß das Zugangsnetz Kenntnis von verhandelten Sitzungsverschlüsselungsschlüsseln hat.

2. Verfahren nach Anspruch 1, wobei das Zugangsnetz entweder ein drahtloses Telekommunikationsnetz, ein Festtelefonnetz oder ein Kabelnetz ist.

3. Verfahren nach Anspruch 2, wobei das Zugangsnetz ein drahtloses Telekommunikationsnetz ist und die privaten Schlüssel für Teilnehmer in einer Netzvermittlungsstelle oder einem mit einer Vermittlungsstelle verknüpften Server gespeichert sind.

4. Verfahren nach einem der vorangegangenen Ansprüche, wobei das unsichere Netz das Internet ist.

5. Verfahren nach Anspruch 4, wobei die sichere Sitzung durch Verwendung des IPSec aufgebaut wird.

6. Verfahren nach Anspruch 5, wobei das öffentliche/private Schlüsselpaar zum Verhandeln von IKE und IPSec Security Associations, im folgenden als SAs bezeichnet, verwendet wird, die die Sitzungsverschlüsselungsschlüssel umfassen.

7. Verfahren nach Anspruch 6, wobei nach dem Empfang einer Anforderung für eine ISAKMP SA im Zugangsnetz eines eine IP-Verbindung initiierenden Endgerätes das Zugangsnetz eine ISAKMP SA mit einem Fernknoten für das initiierende Endgerät verhandelt und die SA-Parameter über eine sichere Verbindung an das initiierende Endgerät übergibt.

8. Verfahren nach Anspruch 7, wobei, sobald die ISAKMP SA aufgebaut worden ist, und wenn das initiierende Endgerät eine Anforderung zum Aufbauen von IPSec SAs an ein Zielendgerät sendet, das Zugangsnetz bestimmt, ob für dieses Endgerät oder das Endgerät, mit dem das initiierende Endgerät eine Verbindung wünscht, ein rechtmäßiger Überwachungsauftrag besteht oder nicht, und, wenn ein solcher Auftrag besteht, sich das Zugangsnetz zwischen dem Endgerät und dem Fernknoten während der Verhandlung eines Paares von IPSec SAs zwischenschaltet.

9. Verfahren nach Anspruch 6, umfassend
- Empfangen einer Anforderung zum Aufbauen einer ISAKMP SA von einem initiierenden Endgerät bei einem Zugangsnetz, dem "ersten" Netz,
- Weiterleiten der Anforderung an das Zugangsnetz, das "zweite" Netz, des anderen Endgerätes;
- Treffen einer Entscheidung im zweiten Netz über das rechtmäßige Überwachen; und
- wenn rechtmäßiges Überwachen erforderlich ist, Verhandeln einer ISAKMP SA direkt zwischen dem zweiten Netz und dem initiierenden Endgerät und Verhandeln einer zweiten ISAKMP SA direkt zwischen dem ersten Zugangsnetz und dem Zielendgerät.

10. Verfahren nach Anspruch 9, wobei, wenn das erste Zugangsnetz von dem initiierenden Endgerät eine Anforderung zum Aufbauen von IPSec SAs empfängt, das zweite Zugangsnetz ein Paar von IPSec SAs direkt mit dem initiierenden Endgerät verhandelt, während der erste Zugriffsknoten ein zweites Paar von IPSec SAs direkt mit dem Zielendgerät verhandelt.

11. Verfahren nach einem der vorangegangenen Ansprüche 1 bis 6, umfassend das Übergeben eines privaten Schlüssels eines zu überwachenden Endgerätes von einem Zugangsnetz zu einem anderen, so daß ein Zugangsnetz im Besitz der privaten Schlüssel von beiden oder sämtlichen in einer IP-Verbindung involvierten Parteien ist.

12. Verfahren nach Anspruch 11, wobei der private Schlüssel von einem Zugangsnetz an ein anderes übergeben wird, ohne den privaten Schlüssel dem empfangenden Zugangsnetz explizit zu offenbaren.

13. Verfahren nach Anspruch 12, wobei dieser private Schlüssel von einem Zugangsnetz an ein anderes als Teil eines ausführbaren Codes übergeben wird, der von dem empfangenden Netz ausgeführt werden kann, um die Verhandlung von Sitzungsverschlüsselungsschlüsseln mit einem Endgerät zu erleichtern, das das empfangende Netz als Zugangsnetz verwendet.

14. Verfahren nach einem der vorangegangenen Ansprüche, umfassend das Speichern des öffentlichen/privaten Schlüsselpaares, das einem Endgerät in einem Speicher des Endgerätes oder mit diesem verknüpft derart zugeordnet ist, daß der Benutzer des Endgerätes den privaten Schlüssel nicht ohne die Zustimmung des Betreibers des relevanten Zugangsnetzes ändern kann.

15. Verfahren nach einem der Ansprüche 1 bis 6, wobei ein Knoten innerhalb des Zugangsnetzes für ein Endgerät Sitzungsverschlüsselungsschlüssel für beide Kommunikationsrichtungen im Namen dieses Endgerätes mit einem entfernten Endgerät oder einem Knoten innerhalb des Zugangsnetzes für dieses entfernte Endgerät verhandelt.

16. Verfahren nach einem der Ansprüche 1 bis 6, wobei Knoten innerhalb des Zugangsnetzes eines Endgerätepaares Sitzungsverschlüsselungsschlüssel mit den jeweiligen entfernten Endgeräten verhandeln, und, während der Überwachung einer Verbindung, jeder Knoten Kommunikationen in einer Richtung überwacht, wobei wenigstens einer der Knoten überwachte Kommunikationen an die anderen der Knoten rückmeldet.

17. Verfahren gemäß einem der vorangegangenen Ansprüche, umfassend das Speichern von Sicherheitsfähigkeiten des Endgerätes im Zugangsnetz.

18. Server zur Verwendung zur Überwachung von IP-Verbindungen zwischen zwei oder mehr Endgeräten, wobei der Server einen Speicher zum Speichern der privaten Schlüssel von öffentlichen/privaten Schlüsselpaaren der jeweiligen Endgeräte umfaßt, eine erste Verarbeitungseinrichtung zum Identifizieren, wann ein rechtmäßiges Überwachen einer Verbindung zu oder von einem Endgerät ausgeführt werden soll, **dadurch gekennzeichnet, daß** er eine zweite Verarbeitungseinrichtung zum Zwischenschalten des Servers zwischen das Endgerät und einem Fernknoten während der Verhandlung von Sitzungsverschlüsselungsschlüsseln zwischen dem Endgerät und dem Fernknoten umfaßt, so daß das Zugangsnetz Kenntnis über verhandelte Sitzungsverschlüsselungsschlüssel hat, und eine dritte Verarbeitungseinrichtung zum Überwachen der Verbindung durch Verwenden des privaten Schlüssels des Endgerätes.

## Revendications

1. Méthode pour faciliter l'interception légale de connexions de réseau, dans laquelle deux terminaux ou plus peuvent communiquer entre chacun d'eux sur réseaux réseau non sûrs, en utilisant un protocole de sécurité standard pour procurer une session sûre, la méthode comprenant :
l'attribution à chaque terminal d'au moins une paire de clés publique/privée, pour utilisation dans des négociations de clés de cryptage de session avec d'autres terminaux ;
dans laquelle un terminal est couplé à un réseau d'interconnexion via un réseau d'accès, l'enregistrement de la clé privée du terminal à l'intérieur du réseau d'accès ; et
lorsqu'une connexion est initialisée à destination ou en provenance d'un terminal sur lequel un ordre d'interception légal a été placé, l'utilisation de la clé privée enregistrée pour ce terminal à l'intérieur du réseau d'accès pour intercepter la communication,
**caractérisée en ce que**
le réseau d'accès à un terminal s'interpose entre ce terminal et un noeud éloigné au cours de la négociation de clés de cryptage de session entre le terminal et le noeud éloigné, de façon que le réseau d'accès a connaissance des clés de cryptage de session négociées.

2. Méthode selon la revendication 1, dans laquelle ledit réseau d'accès est l'un d'un réseau de télécommunications sans fil, d'un réseau de téléphonie à ligne fixe, et d'un réseau de câblé.

3. Méthode selon la revendication 2, dans laquelle le réseau d'accès est un réseau de télécommunications sans fil, et les clés privées pour abonnés sont enregistrées au niveau d'un commutateur de réseau ou d'un serveur couplé à un commutateur.

4. Méthode selon l'une des revendications qui précèdent, dans laquelle ledit réseau non sûr est l'Internet.

5. Méthode selon la revendication 4, dans laquelle ladite session sûre est établie en utilisant IPSec.

6. Méthode selon la revendication 5, dans laquelle la paire de clés publique/privée est utilisée pour négocier des Associations IKE et IPSec Security, appelées ci-après SA, comprenant lesdites clés de cryptage de session.

7. Méthode selon la revendication 6, dans laquelle, après la réception d'une demande pour une ISAKMP SA au niveau du réseau d'accès d'un terminal initialisant une connexion IP, le réseau d'accès négocie une ISAKMP SA avec un noeud éloigné pour le compte du terminal initialisant, et passe les paramètres SA au terminal initialisant via une connexion sûre.

8. Méthode selon la revendication 7, dans laquelle, une fois que la ISAKMP SA a été établie, si le terminal initialisant envoie une demande d'établissement d'IPSec SA vers un terminal de destination, le réseau d'accès détermine si un ordre légal d'interception a été placé ou pas sur ce terminal ou sur le terminal auquel le terminal initialisant souhaite se connecter et, si un tel ordre a été placé, le réseau d'accès s'interpose entre le terminal et le noeud éloigné au cours d'une négociation d'une paire d'IPSec SA.

9. Méthode selon la revendication 6 et comprenant :
la réception au niveau d'un réseau d'accès, du « premier » réseau, une demande d'établissement d'une ISAKMP SA à partir d'un terminal initialisant ;
l'envoi de la demande au réseau d'accès, le « second » réseau, de l'autre terminal ;
la prise d'une décision au niveau du second réseau sur l'interception légale ; et
si une interception légale est requise, la négociation d'une ISAKMP SA directement entre le second réseau et le terminal initialisant, et la négociation d'une seconde ISAKMP SA directement entre le premier réseau d'accès et le terminal de destination.

10. Méthode selon la revendication 9, dans laquelle lorsque le premier réseau d'accès reçoit à partir du terminal initialisant une demande d'établissement d'IPSec SA, le second réseau d'accès négocie une paire d'IPSec SA directement avec le terminal initialisant, tandis que le premier noeud d'accès négocie une seconde paire d'IPSec SA directement avec le terminal de destination.

11. Méthode selon l'une des revendications 1 à 6, et comprenant la passation d'une clé privée d'un terminal devant être surveillé à partir d'un réseau d'accès à l'autre, de sorte qu'un réseau d'accès est en possession des clés privées des deux ou de toutes les parties impliquées dans une connexion IP.

12. Méthode selon la revendication 11, dans laquelle la clé privée est passée d'un réseau d'accès à l'autre sans dévoiler explicitement la clé privée au réseau d'accès récepteur.

13. Méthode selon la revendication 12, dans lequel la clé privée est passée d'un réseau d'accès à l'autre en tant que partie d'un code exécutable qui peut être exécuté par le réseau récepteur pour faciliter la négociation de clés de cryptage de sessions avec un terminal utilisant le réseau récepteur en tant que réseau d'accès.

14. Méthode selon l'une des revendications qui précèdent, et comprenant l'enregistrement de la paire de clés publique/privée attribuée à un terminal dans une mémoire du ou couplé au terminal de telle façon que l'utilisateur du terminal ne peut pas altérer la clé privée sans le consentement de l'opérateur du réseau d'accès important.

15. Méthode selon l'une des revendications 1 à 6, dans laquelle un noeud à l'intérieur du réseau d'accès pour un terminal négocie des clés de cryptage de session pour les deux directions de communications, pour le compte de ce terminal, avec un terminal éloigné ou un noeud à l'intérieur du réseau d'accès pour ce terminal éloigné.

16. Méthode selon l'une des revendications 1 à 6, dans laquelle des noeuds situés à l'intérieur du réseau d'accès d'une paire de terminaux négocie des clés de cryptage de session avec les terminaux éloignés respectifs, et durant l'interception d'une connexion, chaque noeud intercepte des communications dans une direction, avec au moins l'un des noeuds répercutant l'écho de communications interceptées aux autres des noeuds.

17. Méthode selon l'une des revendications qui précèdent, et comprenant l'enregistrement dans le réseau d'accès, des capacités de sécurité de terminaux.

18. Serveur pour utilisation dans l'interception de connexions IP entre deux terminaux ou plus, le serveur comprenant une mémoire pour enregistrer les clés privées de paires de clés publique/privée de terminaux respectifs, des premiers moyens de traitement pour identifier lorsqu'une interception légale doit être exécutée sur une connexion à destination ou en provenance d'un terminal, **caractérisée en ce qu'**il comprend des seconds moyens de traitement pour interposer le serveur entre ce terminal et un noeud éloigné durant la négociation de clés de cryptage de session entre le terminal et le noeud éloigné, de façon à ce que le réseau d'accès ait connaissance de clés de cryptage de session négociées, et des troisième moyens de traitement pour intercepter la connexion utilisant la clé privée du terminal.
